# EUROPEAN PATENT SPECIFICATION

(11) **EP 1 781 956 B1**
(45) Date of publication and mention of the grant of the patent: **26.03.2014**
(21) Application number: 05762295.3
(22) Date of filing: 10.06.2005
(51) Int. Cl.: F16C 1/10

(54) **CABLE ASSEMBLIES WITH SOUND ABATEMENT LAYER**
KABELANORDNUNGEN MIT SCHALLMINDERUNGSSCHICHT
FAISCEAUX DE CABLES COMPRENANT UNE COUCHE DE REDUCTION DE BRUIT

(30) Priority: 13.07.2004 US 889812
(43) Date of publication of application: 09.05.2007
(73) Proprietor: Markel Corporation, Plymouth Meeting PA 19462 (US)
(72) Inventor: REYNOLDS, Kim, Berwyn, PA 19312 (US); PANISH, David J., Norristown, PA 19403 (US)
(74) Representative: Clarke, Lionel Paul
(86) International application number: PCT/US2005/020990
(87) International publication number: WO 2006/016962

(56) References cited:
- US-A- 4 898 046
- US-A- 5 243 876
- US-A- 5 964 251
- US-A- 6 040 384
- US-B2- 6 646 204

## Description

### FIELD OF THE INVENTION

The present invention relates generally to cable and conduit assemblies, and more particularly to flexible cable and conduit assemblies of the type used in vehicles for transmitting rotary or linear motion along a predetermined path.

### BACKGROUND OF THE INVENTION

Motion transmitting cable assemblies are used in several important -applications, including in automotive, marine and aircraft installations. Although such cable assemblies are generally hidden from the view of the user, they nevertheless play an important role in many of these well-known modes of transportation. For example, many automobile accessories, such as heaters, air conditioners and side-view mirrors, are dependent upon such assemblies for convenient and reliable operation. Motion transmitting cable assemblies are also frequently indispensable components in the mechanisms used to control critical aspects of vehicle operation. For example, throttle cables, clutch cables, and shifter cables are frequently used to control speed and power, respectively.

Typically the construction consists of an inner wear liner commonly made from thermoplastic materials such as polyamide, acetal, polyethylene or similar materials. The inner layer is frequently jacketed with an outer layer of another thermoplastic material for better dimensional control in down stream processes and for mechanical integrity. Examples of outer jacket materials include polyamide 6 and 6/6, polypropylene, polybutylene, terphthalate and the like. For transmission cables this composite is frequently then flat wrapped with a stainless steel ribbon and/or over laid with a full compliment of stainless steel wires. Typically, there is a final jacket with a polyester such as a DuPont Hytrel.

In each of these types of applications, the cable or the conduit is frequently routed through the vehicle in close proximity to many other parts of the vehicle. Such routing sometimes requires the cable or conduit to be shaped with numerous twists, bends and the like, frequently in close proximity to or touching other parts or components of the vehicle. As a result, it is not uncommon for the cable or conduit to exhibit vibrations, either inherent to the desired function of the cable or conduit and/or resulting from vibrations originating from other sources in the environment. These vibrations frequently result in the transmission and/or propagation of unwanted vibration or noise to the passenger compartment of the vehicle, and hence to the ears of the passenger or other occupants. This can present obvious unwanted consequences that can at least be annoying to the passenger or other occupants of such vehicles. Furthermore, such noise problems are frequently perceived as an overall negative quality factor in the customer purchase decision.

It is also not uncommon for the cable or conduit to be exposed to harsh conditions, such as high temperatures. Accordingly, such conduits and cables frequently need to be constructed to withstand such conditions.

In many applications, noise and vibration have heretofore been reduced by the placing of extensional dampers on the devices or apparatuses being used. Extensional dampers are composite pads comprised of a viscoelastic polymer or resin, filler and additive composition layer having on one side of such layer a pressure sensitive or hot melt adhesive. However, such pads are difficult to affix to or shape around unusual or undulating shapes as commonly occurs in connection with the cables and conduits of the present invention. Furthermore the cost of applying such dampers to the conduits or cables of the present invention would be prohibitive in most if not all applications.

Alternatively, it has been reported that various types of coatings have been placed in or sprayed on parts of the underside exterior surfaces of automobiles. Such coatings are usually used for corrosion protection by providing abrasion or stone-impact resistance for the painted surfaces. Such coatings techniques have several drawbacks. For example, such coatings are commonly based upon elastic polyvinyl chloride and are formulated and applied in such a way that they do not provide significant noise and vibration reduction. In other applications, protective coatings are formed from epoxy or modified epoxy resin formulations applied in the form of an electro-deposition coating. Unfortunately, the epoxy or modified epoxy resin formulations usually form brittle or highly cross-linked networks and are used in thicknesses, which have limited effect on reducing noise and/or vibration propagation. Furthermore, it is not clear that such prior coating techniques would be capable of withstanding the harsh environment to which many of the present cables/conduits are exposed or that such coatings would remain intact considering the twists and bends to which many of the present cables and conduits would be exposed.

US Patent No. 5.964,251 describes a conduit for a motion transmitting member in an automobile comprising an inner tube comprised of fluorocarbon polymeric material and having an inner surface for contacting and containing fluids or a motion transmitting member, and a chemically etched outer surface having a substantial portion of the fluorine of the fluorocarbon polymer substituted by a polar moiety. The conduit further includes an outer tube comprising an inner surface comprised of polymeric material containing sufficient polar groups such that hydrogen bonding at the interface between the outer surface of the inner tube and the inner surface of the outer tube prevents substantial relative separation of or movement between the inner and outer tubes.

US Patent No. 6,040,384 describes a motion transmitting cable assembly comprising an elongated core for transmitting a force along a predetermined path and an abrasion resistant paste extruded tubular product for guiding the core and having a low friction inner surface against which said core bears as it transmits the force along said predetermined path, said low friction surface comprising a major proportion of fluorocarbon polymer resin and less than about 10% by weight polyimide resin.

Accordingly, applicants have come to recognize the need for improved cable and conduit assemblies having improved noise abatement properties.

### SUMMARY

The present invention is a motion transmitting cable assembly (10) comprising:
an elongated core (11, 12a) for transmitting a force along a predetermined path; a liner (30) comprising an outer layer (31, 12b) formed from resin comprising thermoplastic elastomer (TPE); and a layer (33) substantially surrounding said liner and comprising a plurality of metallic elements (32) in contact with said outer layer of said liner.

Preferred embodiments of each of the apparatus aspects are defined by the dependent claims. The outer layer in intimate contact with, the inner layer comprises thermoplastic elastomer ("TPE"), understood to include thermoplastic vulcanizates "TPV's" and melt processible rubbers "MPR's', of a type and thickness effective to substantially improve the noise rating of the structure. The term "noise rating" as used herein is the rating received by such a structure when subjected to the noise rating tests described in the example hereof.

An important aspect of the present invention resides in applicants' discovery that TPE can be effectively used in cable assemblies and/or conduits in the configurations described above to dramatically improve the noise ratings of such structures while avoiding one or more of the disadvantages associated with prior solutions to the noise problems in automobiles and the like. It will be recognized by those skilled in the art in view of the teachings contained herein that any one of the materials within the group thermoplastic elastomers may be used in accordance with the preferred aspects of the present invention, without necessarily being limited by or to any particular categorization. It will also be understood by those skilled in the art that the particular type of TPE used in the thickness of the outer layer or wall surrounding the inner wall will depend upon numerous factors particular to each application, and that all such variations are adaptable for use within the scope of the present invention in view of the teachings contained herein. In many preferred embodiments, however, it is contemplated that the outer wall of the present invention will have a thickness of from about 0.01 inch to about 0.1 inch, and more preferably of from about 0.02 inch to about 0.05 inch. In certain of those embodiments in which the outer wall is in the form of a generally cylindrical member, it is preferred that the inside diameter of the outer wall is from about 0.1 inch to about 0.25 inch, with an inside diameter of from about 0.15 to about 0.2 inch being even more preferred in certain embodiments.

In many of the preferred embodiments of the present invention, the cable assembly or conduit exhibits a noise rating, which is sometimes referred to herein as "NR" for convenience, of less than about six (6), preferably less than about five (5), more preferably less than about three (3) and even more preferably less than about one (1).

In certain preferred embodiments, the articles of the present invention comprise at least two walls arranged in a coaxial configuration wherein the inner wall comprises a fluorocarbon polymer resin, preferably PTFE, and the outer wall comprises, and preferably consists essentially of, TPE.

Although applicants do not intend to necessarily be bound to or by any particular theory of operation, applicants have come to believe that noise or other unwanted vibrations in the liners and conduits of the present invention may originate in transmission cables as a results of core wire "slap" against the inside of the load bearing liner. Furthermore, it is believed that this condition is aggravated when the inside diameter of the liner is small, as standing vibration waves in the core wire are more likely to come into contact with the inside surface of the liner than for larger inside diameter analogous constructions. Applicants also believe that vibrations that cause unwanted noise may also originate through the use of multi-element metallic structures in the conduit, for example as may be present in the lay wire construction used in many embodiments. Since these metallic elements, such as the steel lay wires described above, are typically closely packed and intimate contact with one another, it is believed that the metallic elements tend to pick up and/or amplify vibrations from road shock or other likely "in situ" phenomena. Applicants have therefore come to believe that it is advantageous to utilize structures and/or materials, which have the tendency to isolate the inner member from the outer metallic components, which are believed to readily transmit unwanted vibrations. The outer surface layer of the liner of the present invention based on the characteristics of the preferred TPE material which comprises the outer layer, tends to act as an isolation layer, impeding and/or absorbing energy transfer from the core wire to the outer metallic layers, such as stainless steel wrap and/or lay wires. Certain aspects of applicants' invention are based, in part, on applicants' surprising discovery that in such constructions TPE is substantially more effective as a vibrational energy absorbing/reducing medium than heretofore used thermoplastic jacketing materials, such as PA 6, PA 6/6, HDPE, PP, or polyesters. Also, as explained in detail hereinafter, applicants have found that certain structural features of the outer liner surface in preferred embodiments independently provide noise-deadening advantages.

### BRIEF DESCRIPTION OF THE DRAWINGS

FIG. 1 is a semi-schematic representation of a cable assembly configuration according to one embodiment of the present invention.
FIG. 2 is a cross-sectional view taken along lines 2--2 of the cable assembly configuration shown in FIG. 1.
FIG. 3 is a cross-sectional view of a preferred liner according to one embodiment of the present invention.

### DETAILED DESCRIPTION OF PREFERRED EMBODIMENTS

Cable assemblies are capable of utilizing numerous structural details, and it is contemplated that all such cable assemblies are adaptable for use in accordance with the present invention. More specifically, motion transmitting cable assemblies according to preferred embodiments of the present invention comprise a conduit and a motion transmitting core element movably disposed in the conduit. The conduit typically has fittings at each end thereof for attaching the cable assembly to a support structure. In one type of assembly, commonly referred to as a push-pull cable assembly, the cable core is both pushed and pulled to effect remote control of some servient mechanism, apparatus or device. When push-pull cable assemblies are operated in the push mode, the cable core is placed under a compressive load and a substantial lateral load is transmitted to the wall or layer adjacent to the cable. The layer or composite layers, which are adjacent to the cable in such constructions, are sometimes referred to as the "liner" of the cable assembly. As a result, the sidewalls of the liner are frequently subject to intermittent and potentially severe loading, depending upon the mode of operation.

Another type of cable assembly is commonly referred to as a "pull-pull" cable assembly. In such assemblies, the core element is substantially always operated in tension, and substantially never in compression. While such assemblies do produce wear of the cable liner, the wear is generally not as severe as with the push-pull type assemblies. In rotary type assemblies, the cable core is typically rotated in predetermined relation to an operating parameter, such as the speed of a motor vehicle. In such configurations, the conduit liner is also subject to abrasion as a result of contact with the rotating core.

In preferred embodiments, therefore, the inner wall of the present cable assemblies is comprised of, and preferably consists essentially of, a material or combination of materials, in one or more layers, which provides a relatively high degree of resistance to abrasion. The materials for forming such inner walls or layers are varied, and all such materials are within the broad scope of the present invention. In many preferred embodiments, the inner wall comprises, preferably in major proportion by weight, a fluorocarbon polymer, preferably PTFE and may contain a filler material in minor proportion, preferably less than about 25% and even more preferably less than about 15% by weight. Such filler materials can be organic or inorganic, and in certain situations it may be preferred to use both organic and inorganic fillers. In addition to fluoropolymers, other materials, such as, ployolefins (such polyethylene polypropylene, polymethylpentene), polyamides (e.g., Nylon), and polybutyleneterepthalates (PBTs), can also be used as a major component of the inner wall.

The types of materials which can be used to form the inner wall of the cable semblance of the present invention are disclosed in the following patents, each of which is incorporated herein by reference: U.S. Patent Number 6,040,384; 6,062,271; and 5,243,876.

Although it is believed that all types of fluorocarbon polymer resins have utility in the present invention, in certain embodiments is preferred at the inner wall comprises polytetrafluoroethylene (PTFE), including copolymers made from or containing PTFE. Accordingly, the term PTFE as used herein includes not only polymers that would be considered homopolymers of polytetrafluoroethylene, but also co-polymers, terpolymers and the like which are based on polytetrafluoroethylene. For example, the PTFE in certain embodiments is polymer formed by the copolymerization of TFE monomer and up to about 2% by weight of a comonomer, such as chlorotrifluoroethylene.

### PREFERRED CABLE ASSEMBLIES

The present invention provides cable assemblies adapted to transmit motion along a predetermined path between two remotely located points. The assemblies generally include a torque or force transmitting core member adapted to carry the torque or force along the predetermined path. The principal requirement of the core member is that it is of sufficient strength and durability to reliably withstand the various stresses and loads associated with the transmission of the force or torque. Many such motion-transmitting core members are well known in the art, and all are adaptable for use according to the present invention. According to preferred embodiments, the core is a stranded steel wire or rope having a generally circular cross-section and a diameter of from about 50 mils to about 150 mils.

The present cable assemblies also comprise guide means for guiding the movement of the core member along the predetermined path. In order to obtain operative movement between the core and guide means, the cable assemblies of the present invention commonly require that a gap or clearance exist between the surface of the core and the guide means. It will be understood by those skilled in the art that the amount of gap or clearance which is provided by any particular cable assembly configuration is a function of numerous variables, including the contemplated routing for the assembly, the type of motion the assembly will be used to transmit, and the extent of the load to be transmitted. Accordingly, all such gaps and clearances which permit the repetitive relative movement between the core and the guide means under the conditions of expected use are within the scope of the present invention.

The guide means preferably includes the inner wall or layer of the present invention having a low friction-bearing surface against which the core member bears as it transmits the force or torque along the predetermined path. As mentioned above, the low friction surface portion of the inner layer of wall is preferably comprised of fluoropolymer resin, preferably PTFE. The material from which the inner layer is formed may optionally include inorganic fillers, lubricants, pigments and other modificants as will be appreciated by those skilled in the art. According to preferred embodiments, the composites of the present invention consist essentially of from about 70% to about 99% by weight of fluorocarbon polymer and from about 1 % to less than about 30% by weight of filler. As the term is used herein, fluorocarbon polymer refers to and is intended to include not only a single fluorocarbon polymer entity but also a mixture of any two or more fluorocarbon polymer entities.

According to especially preferred aspects of the present invention, the PTFE polymer resins are paste extrudable polymer resins. Such resins are generally in the form of extrusion grade powders, fine powders, and the like. The preferable PTFE powders are dispersion grade and not granular. Techniques for the production of fine PTFE powders are well known, and the use of polymers produced by any of these techniques is well within the scope of this invention. For example, co-coagulated colloidal PTFE particles may also be used in certain embodiments.

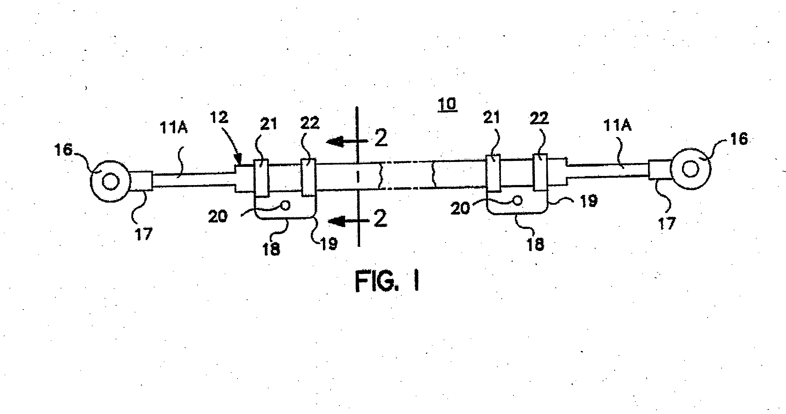

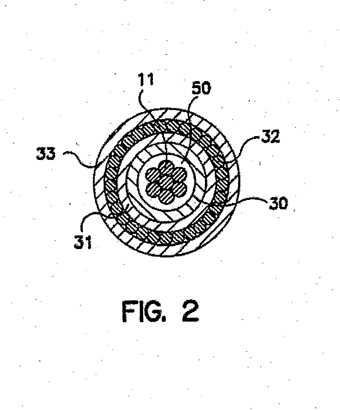

Referring now to FIGS. 1 and 2, a typical push-pull or pull-pull cable assembly configuration is illustrated. The cable assembly, indicated generally at 10, comprises a motion transmitting core 11 surrounded by guide means in the form of a casing or conduit, indicated generally at 12, for guiding the motion of core 11 along its predetermined path. According to the embodiment shown in FIG. 2, core 11 may consist of a multi-stranded wire cable of the type shown in U.S. Pat. No. 4,898,046. Other configurations of core 11 are possible and within the scope of the present invention.

With particular reference now to FIG. 1, the core 11 is seen as including an end portion 11A, which projects lengthwise beyond the end of the casing 12. The length of the projecting end portion 11A of core 11 depends upon the lengthwise sliding movement of the core with respect to casing 12. In typical configurations, the cable assembly 10 is adapted to operatively connect an actuating device, such as a gearshift lever and an operable mechanism, such as an automobile automatic or manual transmission mechanism (also not shown). Means in the form of a pair of eyelet members, or connectors, designated generally as 16, are provided on the ends 11 A of the core 11 for operatively connecting the cable assembly 10 between the actuator and its associated device. Each of the eyelets 16 comprises a generally ring-shaped connecting section and a hollow, sleeve-like mounting section 17 adapted to receive the ends of the core 11A and be secured thereto by crimping or the like. The casing 12 is provided with means for fixedly securing the cable assembly 10 in a predetermined operative position. According to the embodiment shown in FIG. 1, such means is provided by a suitable support bracket 18 comprising a generally flat mounting section 19 having an opening 20 adapted to receive a suitable mounting bolt or the like (not shown). Integrally connected to one edge of the bracket 19 is a pair of tab-like elements 21 and 22 secured to outer casing 12.

The configuration of conduit 12 will now be described in more detail in connection with FIG. 2. The conduit 12 is a multi-layered tubular conduit comprising an inner wall or liner 30 immediately surrounding core 11. As clearly illustrated in FIG. 2, a gap or clearance 50 exists between liner 30 and the enclosed core 11. As mentioned hereinbefore, the particular gap employed in any cable assembly configuration will vary widely, depending upon numerous factors and constraints not related to the present invention. For cable assemblies of the general type illustrated in FIGS. 1 and 2, however, it is generally preferred that the gap or clearance will be from about 0.5 mil to about 20 mil, with a gap from about 3 mil to about 15 mil being even more preferred. It will be appreciated by those skilled in the art that the gap 50 will not necessarily be a constant and uniform spacing along the entire length of the cable assembly, especially cable assemblies used in serpentine routings. Accordingly, the term "gap" is generally used herein to define the distance between the outer surface of the core and the inner surface of the guide means based upon the relative dimensions of those elements. It will also be obvious to those skilled in the art that a larger gap may contribute to more noise in a given cable construction due to the possibility of vibrational waves being set up in the core wire within the interior cavity of the cable construction.

According to preferred aspects of the present invention, the inner liner 30 is surrounded by a smooth wall or splined TPE jacket in accordance with the present invention. In certain embodiments, it is believed that the use of a splined or similar configuration has a beneficial further dampening effect on the unwanted vibration or noise. More particularly, in many preferred embodiments, the wall comprising TPE is covered by and in intimate contact with a jacket or covering which contains multiple metallic elements that are in contact with one another or are in closely proximate relationship. For the purpose of convenience, such a jacket is referred to herein as a metal jacket. In certain preferred embodiments, the metal jacket comprises one or more layers formed from flat wrapped metal strips (such as a stainless steel flat wrapped layer), and/or metallic lay wires (such as a full compliment of stainless steel lay wires), and/or a steel over braid (such as a stainless steel over braid). In many preferred embodiments, the metal jacket is enclosed by a thermoplastic jacket, formed for example from a polyester resin (such as Hytrel (Du Pont )), a polyamide resin, or other similar material. In certain preferred embodiments, the metal jacket comprises a first inner layer of flat wrapping and second outer layer of lay wire. In other preferred embodiments, the flat wrap is not used and lay wires are applied directly to the layer of TPE 31, as is shown in Figure 2.

As is known to those skilled in the art, a primary purpose of the metal jacket (such lay wires, wrapping or braiding) is to aid in maintenance and control of the shape and dimension of liner 30. An important aspect of the present invention involves the use of a layer 31 comprising TPE having an outer surface layer surrounded by, and preferably in intimate contact with, at least the inner portion of the metal jacket. Applicants have surprisingly discovered that the use of a layer of TPE as required in accordance with the present invention provides dramatic and significant reduction in the noise level associated with such cable assemblies, and in highly preferred embodiments without having any substantial negative impact on the physical or mechanical properties of the cable assembly. Without being bound by theory, it is believed that this advantage is enhanced in certain preferred embodiments in which the layer has an outer surface with relatively soft protuberances, preferably elongate protuberances such as occur in the splined outer surface configurations, because the protuberances tend extrude slightly between the individual wires and thereby to cause very minute separations of the individual stands that make up the lay wire. This minute separation is believed to reducing the harmonic resonance of the lay wire, wrap, braid or the like, thus reducing the noise level of the assembly.

With reference now to the embodiment shown in FIG. 2, a full compliment of lay wire 32 surrounds TPE layer 31. As will be appreciated by those skilled in the art, the use of a full compliment of lay wire provides added resistance to axial compressive load deflection. Generally, each element 32 of the lay wire encircles the liner 31 at a periodic distance along the length of the cable assembly. Although any lay wire pitch may be used in accordance with the present invention, in certain preferred embodiments the lay wire pitch (that is, the number of times the wire makes a full rotation around the liner per inch of liner length) is from about 0.07 to about 1 and even more preferably from about 0.1 to about 0.3. Of course, as described above, the lay wire may be arranged in a spaced relationship, omitted, or replaced with a wire braided construction when axial load deflection resistance is not an important requirement, such as may be the case in certain pull-pull type cable assemblies. In certain other embodiments, an inner wrap of flat wire or other material (not shown) may encircle the liner as is understood by those skilled in the art. An outer jacket 33 encases the lay wire 32 in the preferred embodiment illustrated in the figures. The outer jacket 33 preferably comprises a material, which provides improved mechanical integrity to the cable conduit. The jacket may be formed from a wide variety of materials, including but not limited to materials such as Hytrel (DuPont) polyester. As will be appreciated by those skilled in the art, conduit 12 provides means for guiding the movement of core member 11 along the selected predetermined path. The inner wall of liner 30 provides the conduit 12 with a low friction bearing surface against which said core member bears as it moves along its predetermined path, while the outer wall or layer 31 provides noise abatement properties to the cable assembly. As mentioned above and explained more fully hereinafter, the formation of inner/outer wall combination 30/31 provides an abrasion-resistant, low-friction surface which allows efficient and reliable operation of the cable assembly 10 while greatly reducing the generation and transmission of noise and/or vibration during operation of the vehicle in which the cable assembly is mounted.

According to the preferred configuration shown in FIG. 2, the inner/outer wall configuration is provided in a generally circular cross-section. It will be appreciated by those skilled in the art, however, that other configurations of the liner are available and within the scope of the present invention. For example, the inner layer of liner 30 may comprise a tubular member having a plurality of convolutions, which facilitate bending and longitudinal compression thereof, as disclosed in U.S. Pat. No. 3,930,419. Furthermore, cable assemblies of the type disclosed in U.S. Pat. No. 4,112,708 have tubular liners formed with numerous cross-sectional configurations. All such variations are within the scope of the present invention.

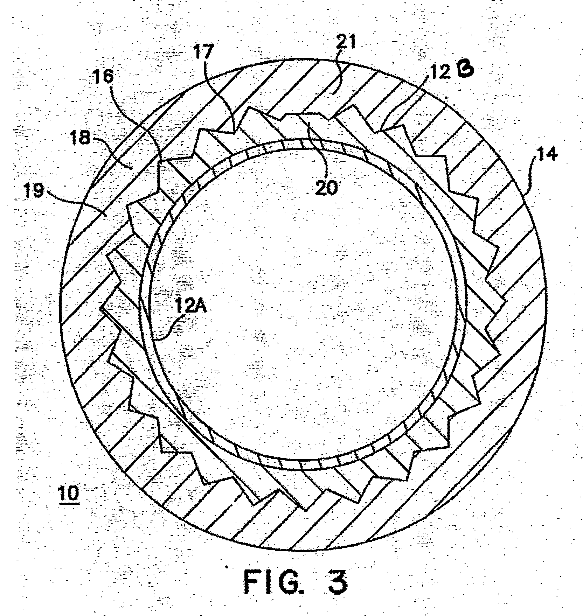

A preferred embodiment of the liner portion of the present invention will now be described with reference to the FIG. 3. In particular, FIG. 3 illustrates an improved low noise motion transmitting shifter cable liner, designated generally as 10, in section view. Liner 10 preferably comprises a PTFE inner wall or layer 12A and a coaxial TPE outer layer or wall 12B. The outer surface of inner wall 12A is substantially smooth in the illustrated embodiment shown in FIG. 3. The outer surface of the TPE 12B layer includes a plurality of parallel ridges 16 separated by valleys or grooves 17, each of which extend longitudinally along the outer surface of inner tube. A metal jacket such as a full compliment of lay wires (not shown) is installed over the splines. Alternatively, the splined TPE has applied thereto a stainless steel flat wrapped construction. Without being bound by theory, it is anticipated that the extrusion of the spline tips into the interstices of sequential flat wraps or the lay wires, in addition to the air entrapment within the splines, will significantly interfere with the sound propagation properties that would otherwise obtain in accordance with prior constructions.

### THE METHODS

It will be appreciated by those skilled in the art that numerous and varied methods may be used to form the products of the present invention.

One preferred method for making the liners and cable assemblies of the present invention is now described. For the purposes of illustration, the methods will be described in connection with the production of tubular conduits comprising an inner tube comprised of PTFE and an outer tube comprised of TPE. It will be appreciated, however, that the methods described hereinafter are not exclusive and that other materials may be used for the inner wall and methods may used to form the conduits of the present invention.

The conduit 10 is preferably manufactured by providing an inner tube by forming a paste extruded PTFE tubular product using any one of a variety of applicable fabricating methods, including various extruding techniques known in the art. The preferred methods further comprise extruding the outer wall or layer of TPE, over the inner wall (preferably of PTFE). In certain embodiments, the outer wall has an outer surface longitudinally grooved/ridged, as disclosed in Fig. 3. As is well known, extrusion of thermoplastic resin typically occurs in a melt process during which the resin is in a relatively fluid, mobile state. Thus, by melt extruding a TPE resin over the inner tube, generally a strong interference adherence of the outer wall to the inner wall can be achieved.

### EXAMPLES

### COMPARATIVE EXAMPLE 1

A liner for a cable assembly is formed having a PTFE inner wall filled with about 10% by weight of polyarylene sulfide, as disclosed in U.S. Pat. No. 4,362,069. An outer jacket consisting of polyamide resin, namely Nylon 66 is formed over the inner PTFE tubular layer. The inside diameter of the inner PTFE tube is about 0.14 in and the outer diameter of the inner wall is about 0.165 in. The outer wall thus formed had a wall thickness of about 0.02 inches. The cable assembly was tested and found to have a noise rating (NR) of from about seven to about eight, on a scale from 0 to 10 where 0 is no noise transmission and 10 is very high noise transmission. The noise rating test was conducted in a standard test procedure in which a cable assembly is vibrated at one end and the noise transmission characteristics are monitored at the opposite end by the use of a microphone and amplifier/recording system indicating decibel levels reached at one end of the conduit when a constant vibrational input is applied at the opposite end. The results rank the noise transmission measured on the afore-mentioned 1 to 10 scale.

### EXAMPLE 1

A liner was formed as in Comparative Example 1 except that the outer wall was formed from TPE. The liner was tested and found to have had noise rating of from about 0 to about 1, which is the lowest measurement obtainable on this scale within the practical limits of the measurement system.

### COMPARATIVE EXAMPLE 2

A cable assembly of the general type illustrated in the Figures is formed from a liner produced as in Comparative Example 1, except that an unfilled PTFE tube is used in place of the PTFE/Nylon composite construction. The inside diameter of the PTFE tube is 3.55 mm and outside diameter of the PTFE tube is 5.15 mm. The PTFE tube had a wall thickness of about 0.08 mm. A full compliment of lay wires covered the PTFE tube and was in turn covered by a Nylon jacket. The cable assembly was incorporated into the transmission cable system of an automobile. The assembly sample was subjected to a 160 Hz reference input signal applied to one end of the cable and the vibrational energy of the respective sample was measured at the opposite end by a microphone at 4 kHz. The measured vibrational energy was about 80 dB.

### EXAMPLE 2

Comparative Example 2 is repeated except the liner is replaced with a liner in accordance with the present invention. More specifically, the liner comprised a PTFE inner wall filled with about 10% by weight of polyarylene sulfide, as disclosed in U.S. Pat. No. 4,362,069. An outer wall of TPE was formed over the inner PTFE tubular layer. The inside diameter of the inner PTFE tube is about 3.55 mm and the outer diameter of the inner wall is about 4.19 mm, thus providing an inner wall thickness of about 0.32 mm. The inside diameter of the outer TPE tube is about 4.19 mm and the outside diameter of the outer TPE tube was about 5.15 mm, thus providing an outer wall thickness of about 0.48 mm and a total liner thickness the same as in Comparative Example 2. The same noise test as described in Comparative Example 2 is conducted and the cable assembly is observed to have a dramatically improved noise level of only 50 dB.

It will be appreciated by those skilled in the art that the preferred embodiments disclosed herein are illustrative of the present invention but not limiting thereof. Accordingly, modifications of the disclosed embodiments are possible without departing from the proper scope of the present invention, which is defined by the claims, which follow.

## Claims

1. A motion transmitting cable assembly (10) comprising:
an elongated core (11) for transmitting a force along a predetermined path;
**characterised by** a liner (30) comprising an outer layer (31, 12b) formed from resin comprising thermoplastic elastomer (TPE); and
a layer (33) substantially surrounding said liner and comprising a plurality of metallic elements (32) in contact with said outer layer of said liner.

2. A motion transmitting cable assembly according to claim 1, wherein the liner is an abrasion resistant liner for guiding the core and has an inner layer having a low friction inner surface against which said core bears as it transmits the force along said predetermined path; and wherein the outer layer comprising TPE substantially surrounds said inner layer.

3. The cable assembly of claim 1 or claim 2 wherein said liner has an inner layer comprising fluorocarbon polymer.

4. The cable assembly of claim 2 wherein said fluorocarbon polymer comprises PTFE.

5. The cable assembly of claim 2 wherein said inner surface comprises PTFE.

6. The cable assembly of claim 2 wherein said inner surface is the inner surface of an inner layer of PTFE.

7. The cable assembly of claim 5 wherein said outer layer (31) of the liner is in intimate contact with said inner layer.

8. The cable assembly of claim 5 wherein said outer layer is formed integral with said inner layer.

9. The cable assembly of claim 1 or claim 2 wherein the outer surface of said outer layer is substantially smooth.

10. The cable assembly of claim 1 or claim 2 wherein the outer surface of said outer layer comprises a splined surface.

11. The cable assembly of claim 1 or claim 2 having a noise rating of less than about 6.

12. The cable assembly of claim 1 or claim 2 wherein said plurality of metallic elements comprises a plurality of lay wires.

13. The cable assembly of claim 1 or claim 2 wherein said plurality of metallic elements comprises flat wrapped metallic ribbon.

14. The cable assembly of claim 1 or claim 2 wherein said plurality of metallic elements comprises a plurality of lay wires and at least one flat wrapped metallic ribbon.

15. The cable assembly of claim 2 further comprising a metal jacket surrounding said liner and in intimate contact with said outer layer.

16. The cable assembly of claim 2 wherein said outer surface of said liner has a thickness of from about 0.25 mm to about 2.5 mm (about 0.01 inch to about 0.1 inch).

## Patentansprüche

1. Bewegung übertragende Kabelanordnung (10), umfassend:
einen länglichen Kern (11) zum Übertragen einer Kraft entlang eines vorgegebenen Pfads;
**gekennzeichnet durch** ein Futter (30), das eine Außenschicht (31, 12b) umfasst, die aus Harz gebildet ist, das thermoplastisches Elastomer (TPE) umfasst; und
eine Schicht (33), die das Futter im Wesentlichen umgibt und eine Vielzahl metallischer Elemente (32) umfasst, die mit der Außenschicht des Futters in Kontakt sind.

2. Bewegung übertragende Kabelanordnung nach Anspruch 1, wobei das Futter ein abriebfestes Futter zur Führung des Kerns ist und eine Innenschicht aufweist, die eine Innenfläche geringer Reibung hat, gegen die der Kern drückt, sowie er die Kraft entlang des vorgegebenen Pfads überträgt; und, wobei die TPE umfassende Außenschicht im Wesentlichen die Innenschicht umgibt.

3. Kabelanordnung nach Anspruch 1 oder Anspruch 2, wobei das Futter eine Innenschicht aufweist, die Fluorkohlenstoffpolymer umfasst.

4. Kabelanordnung nach Anspruch 2, wobei das Fluorkohlenstoffpolymer PTFE umfasst.

5. Kabelanordnung nach Anspruch 2, wobei die Innenfläche PTFE umfasst.

6. Kabelanordnung nach Anspruch 2, wobei die besagte Innenfläche die Innenfläche einer Innenschicht von PTFE ist.

7. Kabelanordnung nach Anspruch 5, wobei die Außenschicht (31) des Futters in innigem Kontakt mit der Innenschicht ist.

8. Kabelanordnung nach Anspruch 5, wobei die Außenschicht integral mit der Innenschicht gebildet ist.

9. Kabelanordnung nach Anspruch 1 oder Anspruch 2, wobei die Außenfläche der Außenschicht im Wesentlichen glatt ist.

10. Kabelanordnung nach Anspruch 1 oder Anspruch 2, wobei die Außenfläche der Außenschicht eine gekerbte Oberfläche umfasst.

11. Kabelanordnung nach Anspruch 1 oder Anspruch 2 mit einer Lärmbewertung von weniger als ca. 6.

12. Kabelanordnung nach Anspruch 1 oder Anspruch 2, wobei die Vielzahl metallischer Elemente eine Vielzahl von Schlagdrähten umfasst.

13. Kabelanordnung nach Anspruch 1 oder Anspruch 2, wobei die Vielzahl metallischer Elemente flaches umwickeltes Metallband umfasst.

14. Kabelanordnung nach Anspruch 1 oder Anspruch 2, wobei die Vielzahl metallischer Elemente eine Vielzahl von Schlagdrähten und zumindest ein flaches umwickeltes Metallband umfasst.

15. Kabelanordnung nach Anspruch 2, die ferner einen Metallmantel umfasst, der das Futter umgibt und in innigem Kontakt mit der Außenschicht ist.

16. Kabelanordnung nach Anspruch 2, wobei die Außenfläche des Futters eine Dicke von ab ca. 0,25 mm bis ca. 2,5 mm (ca. 0.01 Zoll bis ca. 0,1 Zoll) aufweist.

## Revendications

1. Ensemble câble de transmission de mouvement (10) comprenant :
une âme allongée (11) pour transmettre une force le long d'un chemin prédéterminé ;
**caractérisé par** une gaine (30) comportant une couche externe (31, 12b) formée à partir de résine comprenant un élastomère thermoplastique (TPE) ; et
une couche (33) entourant essentiellement ladite gaine et comportant une pluralité d'éléments métalliques (32) en contact avec ladite couche externe de ladite gaine.

2. Ensemble câble de transmission de mouvement selon la revendication 1, dans lequel la gaine est une gaine résistante à l'abrasion pour guider l'âme et a une couche interne ayant une surface interne à coefficient de frottement réduit contre laquelle ladite âme s'appuie lorsqu'elle transmet la force le long dudit chemin prédéterminé ; et dans lequel la couche externe comprenant du TPE entoure essentiellement ladite couche interne.

3. Ensemble câble selon la revendication 1 ou la revendication 2, dans lequel ladite gaine a une couche interne comprenant un polymère au fluorocarbone.

4. Ensemble câble selon la revendication 2, dans lequel ledit polymère au fluorocarbone comprend du PTFE.

5. Ensemble câble selon la revendication 2, dans lequel ladite surface interne comprend du PTFE.

6. Ensemble câble selon la revendication 2, dans lequel ladite surface interne est la surface interne d'une couche interne de PTFE.

7. Ensemble câble selon la revendication 5, dans lequel ladite couche externe (31) de la gaine est en contact étroit avec ladite couche interne.

8. Ensemble câble selon la revendication 5, dans lequel ladite couche externe est formée solidairement avec ladite couche interne.

9. Ensemble câble selon la revendication 1 ou la revendication 2, dans lequel la surface externe de ladite couche externe est essentiellement lisse.

10. Ensemble câble selon la revendication 1 ou la revendication 2, dans lequel la surface externe de ladite couche externe est une surface cannelée.

11. Ensemble câble selon la revendication 1 ou la revendication 2 ayant un indice nominal de bruit inférieur à environ 6.

12. Ensemble câble selon la revendication 1 ou la revendication 2, dans lequel ladite pluralité d'éléments métalliques comprend une pluralité de fils toronnés.

13. Ensemble câble selon la revendication 1 ou la revendication 2, dans lequel ladite pluralité d'éléments métalliques comprend un ruban métallique enroulé plat.

14. Ensemble câble selon la revendication 1 ou la revendication 2, dans lequel ladite pluralité d'éléments métalliques comprend une pluralité de fils toronnés et au moins un ruban métallique enroulé plat.

15. Ensemble câble selon la revendication 2, comprenant en outre une enveloppe métallique entourant ladite gaine et en contact intime avec ladite couche externe.

16. Ensemble câble selon la revendication 2, dans lequel ladite surface externe de ladite gaine a une épaisseur située entre environ 0,25 mm et environ 2,5 mm (environ 0,01 pouce et environ 0,1 pouce).
